Europäisches Patentamt

European Patent Office

Office européen des brevets

(19)

(11) **EP 1 146 434 A1**

(12) ## DEMANDE DE BREVET EUROPEEN

(43) Date de publication:
**17.10.2001 Bulletin 2001/42**

(51) Int Cl.⁷: **G06F 17/00**, G06K 9/46

(21) Numéro de dépôt: **00410036.8**

(22) Date de dépôt: **10.04.2000**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **Sudimage**
**94230 Cachan (FR)**

(72) Inventeur: **Azencott, Robert**
**75010 Paris (FR)**

(74) Mandataire: **de Beaumont, Michel**
**1bis, rue Champollion**
**38000 Grenoble (FR)**

(54) ## Procédé d'identification de formes géométriques sur une courbe

(57)     L'invention concerne un procédé d'identification d'une forme géométrique prédéterminée dans une courbe bidimensionnelle correspondant à l'évolution d'un signal échantillonné, comprenant les étapes suivantes :

définir la forme à identifier par la nature et le nombre de ses extrema de courbure successifs ;
déterminer la courbure en chacun des points échantillonnés du signal ;
sélectionner des points critiques correspondant à un nombre limité de points de courbure maximale et minimale ;

affecter à chaque point critique un paramètre de profil $\varepsilon_t$ tel que $\varepsilon_t$ est le signe de la courbure si ce point est un point de courbure maximale, et $\varepsilon_t=0$ si ce point est un point de courbure minimale ; et sélectionner un nombre de points critiques correspondant au nombre d'extrema de courbure de la forme à identifier, et comparer la suite des paramètres de profil des points critiques à la suite caractérisant la nature des extrema de la forme à identifier.

EP 1 146 434 A1

## Description

La présente invention concerne un procédé de spécification, d'identification, et de localisation de types de formes géométriques sur une courbe ou graphe bidimensionnel décrivant l'évolution d'une variable numérique observée y(t) en fonction du temps t.

Dans le cadre d'applications financières, économiques, ou bancaires, y(t) peut représenter le cours d'un titre au temps t, ou celui d'une action, ou la valeur d'un taux de change, ou tout autre indice financier ou économique. Les formes que l'on cherche à identifier sont alors définies en langage imagé par des expressions telles que "tête et épaules", "drapeaux", "couloirs haussiers ou baissiers", "diamants", "lignes de résistance ou de support"... Chacun de ces types de forme géométrique chartiste est assez facilement identifiable par l'oeil humain, à partir d'un nombre limité d'exemples graphiques pour chaque type de forme géométrique. Il est important de remarquer que la notion de type de forme géométrique ci-dessus tolère d'assez fortes variations et déformations effectives que l'oeil humain intègre tout à fait naturellement.

Dans le contexte d'applications industrielles, y(t) peut représenter au temps t la valeur numérique enregistrée par un capteur analogique (pression, température, débit, vitesse, etc.), ou la valeur numérique calculée par un programme spécifique (rendement, puissance, consommation, etc.). Les formes que l'on cherche à identifier sont alors par exemple du type bosse, creux, dos de chameau, choc...

Le signal y(t) peut provenir en temps réel d'un capteur d'une variable d'un système (température, pression, vibration, bruit, signal d'analyse spectrographique, signal d'analyse aux rayons X...). Le signal peut également être un signal d'un tel capteur enregistré dans une base de données numériques. Il pourra également s'agir d'autres types de signaux enregistrés dans une base de données numériques, par exemple, comme cela a été indiqué, un signal caractérisant l'évolution d'une suite de données représentant une information quelconque dont on souhaite analyser les variations, par exemple des données résultant d'analyses statistiques, monétaires ou boursières.

La présente invention vise un procédé de détection automatique, systématique et rapide, d'une forme géométrique prédéfinie.

La présente invention vise également un procédé facilement informatisable permettant de spécifier rapidement et aisément des types de formes géométriques, éventuellement à partir d'un petit nombre d'exemples graphiques (une dizaine par exemple).

Une méthode connue d'identification d'une forme géométrique consiste à présenter à un réseau de neurones artificiels plusieurs centaines d'exemples concrets de cette forme, et plusieurs centaines de contre-exemples (formes totalement différentes) pour opérer un apprentissage automatique. Cette approche neuronale a déjà été utilisée avec un certain succès pour identifier des chiffres manuscrits. Mais le nombre d'exemples effectifs utilisés dans ce cas a largement dépassé la dizaine de milliers, et l'apprentissage a été lent. De plus l'apprentissage est alors très fortement spécifique de la courbe y(t) observée.

Un des buts de la présente invention est de proposer un procédé beaucoup plus rapide et beaucoup plus robuste que les procédés antérieurs, utilisable même si l'on dispose uniquement d'une description théorique (spécification) ou d'un très petit nombre d'exemples (moins d'une dizaine) pour chaque type de forme géométrique que l'on cherche à identifier.

Pour atteindre les objets susmentionnés, la présente invention prévoit un procédé d'identification d'une forme géométrique prédéterminée dans une courbe bidimensionnelle correspondant à l'évolution d'un signal échantillonné (y(t)). Ce procédé comprend les étapes consistant à définir la forme à identifier par la nature (minimum ou maximum positif ou négatif) et le nombre de ses extrema de courbure successifs ; déterminer la courbure ($K_t$) en chacun des points échantillonnés du signal ; sélectionner des points critiques correspondant à un nombre limité de points de courbure maximale et minimale ; affecter à chaque point critique un paramètre de profil $\varepsilon_t$ tel que $\varepsilon_t$ est le signe (+1 ou -1) de la courbure si ce point est un point de courbure maximale, et $\varepsilon_t=0$ si ce point est un point de courbure minimale ; et sélectionner un nombre de points critiques correspondant au nombre d'extrema de courbure de la forme à identifier, et comparer la suite des paramètres de profil des points critiques à la suite caractérisant la nature des extrema de la forme à identifier.

Selon un mode de réalisation de la présente invention, le procédé comprend l'étape consistant à affecter d'autres paramètres aux points critiques et à comparer ces autres paramètres à des caractéristiques de la forme à identifier.

Selon un mode de réalisation de la présente invention, le procédé comprend l'étape consistant à déterminer un paramètre de portée correspondant à la durée entre les points extrêmes d'un profil prédéterminé.

Selon un mode de réalisation de la présente invention, le procédé comprend l'étape consistant à déterminer un paramètre d'intensité correspondant à l'amplitude du signal pour chaque point critique.

Selon un mode de réalisation de la présente invention, le procédé comprend l'étape consistant à déterminer un paramètre de distance entre points critiques.

Le procédé selon l'invention s'applique en particulier à des données financières.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente une portion d'un signal à analyser ;

les figures 2A et 2B représentent respectivement une forme en bosse idéale et une forme réelle à identifier ;

les figures 3A et 3B représentent respectivement une forme de choc idéale et une forme réelle à identifier ; et

les figures 4A et 4B représentent respectivement une forme en dos de chameau idéale et une forme réelle à identifier.

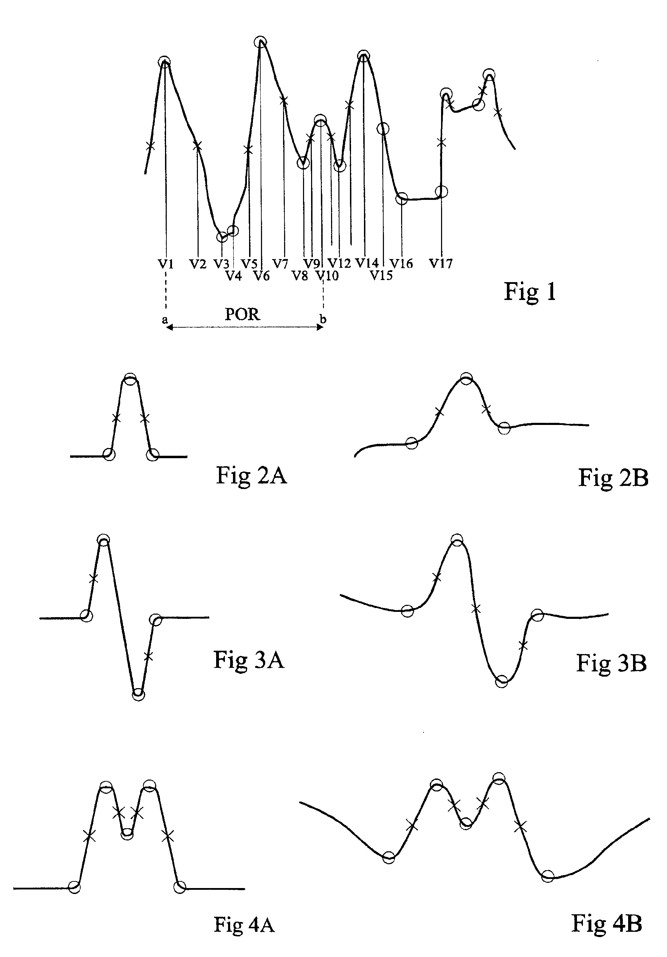

La figure 1 représente une portion d'un signal $y(t)$ à analyser. On suppose que les valeurs $y(t)$ sont échantillonnées à un rythme régulier (non représenté), avec un intervalle de temps fixe entre deux observations numériques successives. Lorsque l'échantillonnage est irrégulier, des techniques informatiques classiques permettent de suréchantillonner artificiellement les observations effectives $y(t)$ pour se ramener à une situation d'échantillonnage régulier.

Dans ce qui suit, les variables numériques effectivement observées sont notées $y(t)$, où $t$ est l'instant d'enregistrement de la valeur numérique $y(t)$. Le temps $t$ est exprimé en nombre entier d'unités temporelles.

Selon la présente invention on procède aux étapes suivantes :

1. détermination de la courbure en chaque point échantillonné de la courbe $y(t)$ ;

2. sélection des points critiques correspondant à un nombre limité de points de courbure maximale et minimale ;

3. affectation à chaque point critique de paramètres caractéristiques ; et

4. sélection d'un nombre de points critiques correspondant au nombre d'extrema de courbure de la forme à identifier, et comparaison de paramètres des points critiques à des paramètres caractérisant les extrema de courbure de la forme à identifier.

## 1. DETERMINATION DE LA COURBURE

De nombreuses techniques classiques de lissage et d'interpolation permettent d'estimer de façon approchée la dérivée première $y'(t)$ et la dérivée seconde $y''(t)$ de la courbe observée $y(t)$. Ces techniques font intervenir les valeurs observées sur une fenêtre de lissage dont la durée est choisie par l'utilisateur du procédé, qui définit ainsi l'échelle du calcul approché de $y'(t)$ et $y''(t)$.

Le but de cette étape est de calculer de façon approchée le module de la courbure au temps $t$, $K(t)$, tel que :

$$K(t) = |y''(t)|/|y'(t)|$$

et son signe $\sigma_t$ = signe de $y''(t)$, de sorte que $\sigma_t$ = +1, -1 ou 0.

## 2. SELECTION DES POINTS CRITIQUES

L'utilisateur du procédé sélectionne par une méthode algorithmique ou empirique adéquate deux entiers M et P tels que M + P < N, où N est le nombre d'observations du signal.

A titre d'exemple d'une telle méthode, l'utilisateur du procédé pourra fixer deux pourcentages arbitraires Q1 et Q2, qui seront en général inférieurs à 5 %, et fixer les valeurs de M et P par M = N x Q1 et P = N x Q2. Si ces valeurs ne sont pas entières, on les remplacera par les entiers les plus proches.

A titre de second exemple de méthode de choix de M et P, l'utilisateur du procédé pourra fixer empiriquement deux seuils positifs A1 et A2 tels que A1 > A2. Les valeurs de M et P seront alors respectivement les nombres d'instants observés $t$ tels que la valeur absolue de la courbure $K(t)$ soit respectivement supérieure à A1 ou inférieure à A2.

Les entiers M et P étant choisis comme indiqué ci-dessus, on range par valeurs numériques croissantes les valeurs absolues de la courbure $K(t)$ calculées comme indiqué ci-dessus, et on sélectionne les M plus grandes de ces valeurs absolues. On identifie la liste des M instants correspondant à ces M plus grandes valeurs absolues de $K(t)$.

On refait des opérations analogues en sélectionnant cette fois les P plus petites valeurs absolues de $K(t)$, et en identifiant la liste des P instants correspondants.

La réunion des deux listes ci-dessus constitue, pour le procédé détaillé ici, la liste des "instants critiques" ou des points critiques du signal observé.

Pour chaque instant critique $t$, on calcule l'entier $\varepsilon(t)$ comme suit :

$\varepsilon(t) = \sigma_t$ si $t$ correspond à un extremum,
$\varepsilon(t) = 0$ si $t$ correspond à un minimum.

En pratique, comme l'illustre la figure 1, les instants critiques correspondent aux extrema de courbure, et aux minima de courbure entre deux extrema. On pourra toutefois trouver deux extrema consécutifs sans point intermédiaire à courbure presque nulle. On pourra éventuellement prévoir une élimination automatique de certaines séquences, par exemple trois minima successifs ou trois maxima successifs.

## 3. AFFECTATION DE PARAMETRES CARACTERISTIQUES

On appelle "portion de signal" (a, b) l'ensemble des observations correspondant à des instants $t$ compris au sens large entre un instant de début, a, et un instant de fin, b, les instants a et b étant des instants critiques, qui peuvent a priori être arbitraires pourvu que a < b.

On appelle R le nombre d'instants critiques t compris entre a et b, en incluant les instants de début et de fin dans ce décompte, de sorte que R est supérieur ou égal à 2.

On désigne par $(v_1, v_2, ... v_R)$ la liste ordonnée des instants critiques contenus dans la portion de signal (a, b), de sorte que $v_1 = a$, et $v_R = b$, ces instants étant représentés en figure 1.

Pour caractériser géométriquement la forme d'une portion de signal (a, b), on calcule au moins certaines des cinq caractéristiques suivantes de cette portion de signal : sa "complexité", son "profil", sa "portée", sa "structure", et son "intensité".

La "complexité" est le nombre R de points critiques compris entre a et b, en incluant les instants de début et de fin dans ce décompte, de sorte que R est supérieur ou égal à 2.

Le "profil" est le vecteur PRF ayant pour coordonnées les R nombres entiers $\varepsilon(v_1), \varepsilon(v_2), ..., \varepsilon(v_R)$. Chaque coordonnée du vecteur PRF ne peut donc prendre que les valeurs 0, 1, -1.

La "portée" est le nombre POR = b - a et correspond à la durée de la portion de signal (a, b).

La "structure" est le vecteur STR de dimension (R-1) dont la j-ème coordonnée STRj est définie par :

$$STRj = (v_{j+1} - v_j)/(b - a)$$

et caractérise les distances entre points critiques.

"L'intensité" est le vecteur INT de dimension R, dont la i-ème coordonnée INTi est définie par :

$$INTi = y(v_i)$$

et caractérise l'amplitude du signal pour chaque point critique.

## 4. SPECIFICATION D'UNE FORME GEOMETRIQUE ET COMPARAISON

Selon la présente invention, on définit une forme géométrique à identifier essentiellement selon ses minima et maxima de courbure et éventuellement selon d'autres paramètres tels que ceux définis précédemment.

A titre d'exemple, les figures 2A, 3A et 4A représentent les formes idéales correspondant respectivement à une bosse, un choc et un dos de chameau.

Une bosse telle qu'illustrée en figure 2A comprend cinq points critiques (R = 5), à savoir successivement un maximum positif, un zéro, un maximum négatif, un zéro et un maximum négatif : le profil PRF = (+1, 0, -1, 0, +1).

Un choc tel qu'illustré en figure 3A comprend sept points critiques : le paramètre de complexité R = 5, et le profil correspondant est égal à (+1, 0, -1, 0, +1, 0, -1).

Pour un dos de chameau tel qu'illustré en figure 4A, le nombre de points critiques ou complexité est égal à 9 et le profil est le vecteur PRFf = (+1, 0, -1, 0, +1, 0, -1, 0, +1).

Pour identifier l'une ou l'autre des trois formes illustrées en figures 2A, 3A et 4A, dans le signal de la figure 1, on analysera de façon successive des ensembles de R points successifs du signal de la figure 1, le nombre R étant égal au nombre de points critiques de la forme à identifier (5, 7 ou 9 dans le cas des exemples précédents) et, pour chaque ensemble de points critiques, on vérifiera si le profil correspond au profil de la forme à identifier.

Cette première comparaison très simple fournit déjà une très bonne identification de formes à identifier. Toutefois, si on le souhaite, on peut affiner le processus d'identification en imposant des conditions supplémentaires sur les autres paramètres définis précédemment tels que la portée, la structure et l'intensité. En effet, comme l'illustrent les figures 2B, 3B et 4B, les formes réelles à identifier peuvent être relativement distinctes des formes idéales des figures 2A, 3A et 4A. On veut toutefois pouvoir éliminer des formes trop éloignées.

Une première condition restrictive sera de spécifier une portée maximum, c'est-à-dire une durée maximum du signal. Par exemple, dans le cas de la bosse, ceci permettra d'éliminer des bosses de trop longue durée.

En imposant une condition restrictive sur les R-1 coordonnées de structure $STR_j$, on pourra également éliminer des signaux indésirés. Par exemple, ceci pourra être utilisé, dans le cas de la figure 2A, pour éliminer une structure temporellement trop asymétrique ou, dans le cas de la figure 3A, pour éliminer une structure de choc dont la partie négative est nettement plus large que la partie positive, ou inversement.

Des conditions restrictives sur l'intensité seront par exemple utilisées dans le cas d'une bosse telle que la figure 2A pour éliminer les bosses de trop faible amplitude. On pourra également utiliser des conditions de validation du type :

INT1 < INT2 < INT3
INT5 < INT4 < INT3

Pour un choc, les conditions sur les intensités pourront permettre d'éliminer des formes dont les parties négative et positive sont trop asymétriques en amplitude. On pourra également poser des conditions de validation du type :

INT1 < INT2 < INT3
INT5 < INT4 < INT3
INT5 < INT6 < INT7

INT7 < INT3

INT5 < INT1

Pour un dos de chameau, la condition sur les intensités permettra par exemple d'éliminer des formes dont la structure comprend un creux central trop peu dessiné, et qui devraient en fait être considérées comme des bosses. On pourra également poser des conditions restrictives du type suivant :

INT1 < INT2 < INT3

INT5 < INT4 < INT3

INT5 < INT6 < INT7

INT9 < INT8 < INT7

INT1 < INT5

INT9 < INT5

Bien entendu, on pourra également prévoir des conditions restrictives mixtes, par exemple sur l'intensité et la structure. L'utilisateur pourra spécifier une famille finie d'inégalités linéaires portant simultanément sur les vecteurs intensité et structure de la portion de signal. Chacune de ces inégalités spécifiables peut donc s'écrire G + H < K, où G et H sont respectivement des combinaisons linéaires (à coefficients librement choisis) des coordonnées respectives des vecteurs INT et STR. Le nombre K est un autre paramètre arbitraire. En pratique chacune des inégalités linéaires de ce type traduit l'alignement approximatif d'un certain nombre d'extrema de la courbure pour le type de forme géométrique considéré.

Il est clair que toutes les conditions énoncées ci-dessus étant de type combinaison linéaire, elles pourront simplement être déterminées par un programme informatique de reconnaissance qui fournira donc ainsi automatiquement l'indication de la présence et de la position d'une forme recherchée dans un signal complexe.

Il s'avère en pratique que ce type de reconnaissance est particulièrement fidèle, le paramètre de courbure correspondant très bien à un paramètre auquel l'oeil humain est normalement sensible.

Il est possible de spécifier et de reconnaître automatiquement plusieurs sous-types disjoints pour un même type de forme géométrique, par exemple pour discriminer plus précisément entre "choc dur" et "choc élastique", ou entre "choc rapide" et "choc lent", le principe de spécification des sous-types restant celui des conditions restrictives décrites ci-dessus. Il faut seulement s'assurer que les spécifications de sous-types constituent bien une particularisation explicite des six conditions spécifiant le type de forme géométrique.

Selon une variante de la présente invention, plutôt que d'imposer a priori une spécification de forme géométrique, il est possible de créer cette spécification à partir d'une famille importante d'exemples effectifs (plusieurs centaines) pour un type de forme géométrique F encore non spécifié formellement. Pour automatiser la spécification de F, on notera que l'ensemble des conditions restrictives cherchées constitue une famille finie d'inéquations linéaires que doit vérifier le vecteur global V regroupant les cinq caractéristiques (telles que définies ci-dessus) d'une portion de signal. Des techniques algorithmiques connues en programmation linéaire dans des contextes très différents permettent de rechercher informatiquement l'ensemble des inéquations linéaires sur les paramètres définis ci-dessus qui sont vérifiées par les exemples effectifs de la forme F à spécifier, et qui ne sont pas vérifiées pour un ensemble de contre-exemples (portions de signal qui ne représentent pas la forme F). Dans ce cadre il est préférable que le nombre de contre-exemples soit au moins de l'ordre du nombre d'exemples.

Si le nombre d'exemples et contre-exemples ci-dessus est de l'ordre du millier, il est possible d'introduire une nouvelle extension du procédé ci-dessus, permettant une spécification et une discrimination automatiques par apprentissage neuronal, en prenant, comme entrés du réseau de neurones artificiels classifiant, le vecteur V regroupant les cinq caractéristiques des portions de signal, et donc en s'appuyant aussi sur la sélection des instants critiques selon le procédé ci-dessus. Le réseau de neurones classifiant peut par exemple être un perceptron multicouches, ou bien encore peut être remplacé par une "support vector machine" (procédé algorithmique introduit et publié par Vapnik). L'avantage essentiel qu'apporte ici le procédé selon l'invention (instants critiques et calcul des caractéristiques de portions de signal) est d'accélérer fortement la vitesse d'apprentissage, et surtout d'augmenter fortement les capacités de généralisation du réseau de neurones. Ceci garantit une capacité de reconnaissance automatique beaucoup plus robuste.

La présente invention est susceptible de diverses variantes et modifications qui apparaîtront à l'homme de l'art qui pourra éventuellement sélectionner d'autres paramètres caractéristiques et d'autres critères de comparaison entre une forme spécifiée et un signal à analyser. On pourra par exemple, dans la comparaison des profils tolérer certaines erreurs.

## Revendications

1. Procédé d'identification d'une forme géométrique prédéterminée dans une courbe bidimensionnelle correspondant à l'évolution d'un signal échantillonné (y(t)), **caractérisé en ce qu'**il comprend les étapes suivantes :

définir la forme à identifier par la nature (minimum ou maximum positif ou négatif) et le nombre de ses extrema de courbure successifs ;

déterminer la courbure (Kt) en chacun des points échantillonnés du signal ;

sélectionner des points critiques correspondant à un nombre limité de points de courbure maximale et minimale ;

affecter à chaque point critique un paramètre de profil $\varepsilon_t$ tel que $\varepsilon_t$ est le signe (+1 ou -1) de la courbure si ce point est un point de courbure maximale, et $\varepsilon_t=0$ si ce point est un point de courbure minimale ; et

sélectionner un nombre de points critiques correspondant au nombre d'extrema de courbure de la forme à identifier, et comparer la suite des paramètres de profil des points critiques à la suite caractérisant la nature des extrema de la forme à identifier.

2. Procédé selon la revendication 1, **caractérisé en ce qu'**il comprend l'étape consistant à affecter d'autres paramètres aux points critiques et à comparer ces autres paramètres à des caractéristiques de la forme à identifier.

3. Procédé selon la revendication 2, **caractérisé en ce qu'**il comprend l'étape consistant à déterminer un paramètre de portée correspondant à la durée entre les points extrêmes d'un profil prédéterminé.

4. Procédé selon la revendication 2, **caractérisé en ce qu'**il comprend l'étape consistant à déterminer un paramètre d'intensité correspondant à l'amplitude du signal pour chaque point critique.

5. Procédé selon la revendication 2, **caractérisé en ce qu'**il comprend l'étape consistant à déterminer un paramètre de distance entre points critiques.

6. Procédé selon l'une quelconque des revendications 1 à 5, **caractérisé en ce qu'**il est appliqué à des données financières.

Fig 1

Fig 2A

Fig 2B

Fig 3A

Fig 3B

Fig 4A

Fig 4B

7

Office européen
des brevets

**RAPPORT DE RECHERCHE EUROPEENNE**

Numéro de la demande

EP 00 41 0036

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | SCHAFFER M ET AL: "A TREE MATCHING ALGORITHM AND VLSI ARCHITECTURE FOR REAL-TIME ID OBJECT CLASSIFICATION" REAL-TIME IMAGING,GB,ACADEMIC PRESS LIMITED, vol. 4, no. 3, 1 juin 1998 (1998-06-01), pages 193-202, XP000765496 ISSN: 1077-2014 * page 194, colonne de gauche, alinéa 4 - colonne de droite, alinéa 3 * | 1 | G06F17/00 G06K9/46 |
| A | US 4 429 996 A (KAMACHI SHINICHI ET AL) 7 février 1984 (1984-02-07) * abrégé * | 1 | |
| | | | **DOMAINES TECHNIQUES RECHERCHES (Int.Cl.7)**<br><br>G06K |

Le présent rapport a été établi pour toutes les revendications

| Lieu de la recherche | Date d'achèvement de la recherche | Examinateur |
|---|---|---|
| LA HAYE | 26 septembre 2000 | Sonius, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 41 0036

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-09-2000

| Document brevet cité au rapport de recherche | Date de publication | Membre(s) de la famille de brevet(s) | Date de publication |
|---|---|---|---|
| US 4429996 A | 07-02-1984 | JP 56150342 A<br>DE 3116203 A | 20-11-1981<br>25-02-1982 |

EPO FORM P0460

Pour tout renseignement concernant cette annexe : voir Journal Officiel de l'Office européen des brevets, No.12/82